Europäisches Patentamt

European Patent Office

Office européen des brevets

(11) Veröffentlichungsnummer: **0 298 369**
**A1**

## EUROPÄISCHE PATENTANMELDUNG

(21) Anmeldenummer: 88110461.6

(51) Int. Cl.⁴: **F28F 1/08**

(22) Anmeldetag: 30.06.88

(30) Priorität: 08.07.87 DE 3722520

(43) Veröffentlichungstag der Anmeldung:
11.01.89 Patentblatt 89/02

(84) Benannte Vertragsstaaten:
**AT BE CH DE FR GB IT LI NL**

(71) Anmelder: **Witzenmann GmbH
Metallschlauch-Fabrik Pforzheim
Östliche Karl-Friedrich-Strasse 134
D-7530 Pforzheim(DE)**

(72) Erfinder: **Schüttler, Peter
Forststrasse 18
D-7532 Niefern-Öschelbronn(DE)**

(74) Vertreter: **Lemcke, Rupert, Dipl.-Ing. et al
Patentanwälte Dipl.-Ing. R. Lemcke Dr.-Ing.
H.J. Brommer Amalienstrasse 28 Postfach
4026
D-7500 Karlsruhe 1(DE)**

(54) **Wärmeaustauschelement in Form eines Wellschlauches.**

(57) Es wird ein Wärmeaustauschelement in Form eines Wellschlauches (1) aus Metall oder Kunststoff mit ringförmiger oder schraubengangförmiger Wellung angegeben, bei dem in Axialrichtung des Wellschlauches gesehen die Breite ($l_a$) der Wellentäler größer als die der Wellenberge ($l_k$) ist.

Fig. 1

## Wärmeaustauschelement in Form eines Wellschlauches

Die Erfindung betrifft ein Wärmeaustauschelement in Form eines von einem der am Wärmeaustausch beteiligten Medien durchströmten Wellschlauches aus Metall oder Kunststoff mit ringförmiger oder schraubengangförmiger Wellung.

Derartige Wärmeaustauschelemente bieten eine große Wärmeaustauschfläche pro Längeneinheit an, wobei die durch die Profilierung erzeugten Turbulenzen des hindurchgeleiteten Mediums sich positiv auf den Wärmeaustausch auswirken.

Durch die Ausbildung als Wellschlauch ist es leicht möglich, das Wärmeaustauschelement mit einem Krümmungen aufweisenden Verlauf anzuordnen, wodurch ohne weiteres die Anpassung an unterschiedlichste räumliche Verhältnisse vorgenommen und auch eine gute Ausfüllung eines bestimmten Volumens, innerhalb dessen das Wärmeaustauschelement angeordnet wird, erfolgen kann. Dabei sind allerdings durch die Krümmbarkeit des Wellschlauches, d.h. dessen minimalen Biegeradius Grenzen gesetzt, die gleichermaßen der in einem bestimmten Volumen unterbringbaren Länge des Wärmeaustauschelementes Schranken auferlegen.

Aufgabe der Erfindung ist es, ein Wärmeaustauschelement der eingangs genannten Art derart auszubilden, daß an einem bestimmten Platz bzw. in einem bestimmten Volumen eine größere Wellschlauchlänge untergebracht werden kann, d.h. also eine dichtere Packung bzw. Füllung eines bestimmten Volumens mit dem Wellschlauch möglich ist. Dabei sollen insgesamt, also sowohl von der Herstellungsseite als auch von seiten der Gestehungskosten keine zusätzlichen Aufwendungen erzeugt werden.

Diese Aufgabe ist erfindungsgemäß dadurch gelöst, daß in Axialrichtung des Wellschlauches gesehen die Breite der Wellentäler größer als die der Wellenberge ist.

Durch diese erfindungsgemäße Maßnahme ist, wie sich gezeigt hat, der minimale Biegeradius des Wellschlauches erheblich verkleinerbar, sodaß der Wellschlauch insgesamt enger bzw. um schärfere Ecken und damit auf kleinerem Raum verlegt werden kann, was gleichbedeutend ist mit einer Vergrößerung der Wärmeaustauschfläche pro mit dem Wellschlauch ausgefüllter Volumeneinheit.

Die erfindungsgemäße Maßnahme ist so gestaltet, daß sie die Gestehungskosten des Wellschlauches nicht beeinflußt, da lediglich die Abmessungen der zur Herstellung des Wellschlauches erforderlichen Werkzeuge etwas anders auszulegen ist.

Als zweckmäßig hat sich eine Gestaltung unter Beachtung der Merkmale des Anspruches 2 erwiesen, durch die man von einem gewünschten minimalen Biegeradius des Wellschlauches ausgehend ohne Schwierigkeiten eine passende Dimensionierung vornehmen kann.

Schließlich ist es bei Herstellung des Wellschlauches aus Metall zweckmäßig, daß dieser nach dem Herstellungsvorgang durch Rekristallisationsglühen wärmebehandelt ist, etwa unter Vakuum bei einer Temperatur von 1000 Grad Celsius. Durch diese Maßnahme ist beispielsweise für einen Wellschlauch aus Edelstahl einer Rückfederung des gekrümmt verlegten Schlauches begegnet und durch die geringere Verstellkraft eine leichtere Biegbarkeit ermöglicht.

Weitere Merkmale und Einzelheiten der Erfindung ergeben sich aus deren nachfolgender Darstellung anhand der Zeichnung. In der Zeichnung zeigen:

Fig. 1 einen Krümmungsbogen eines Metallwellschlauches und

Fig. 2 die Vergrößerung des Ausschnittes A in Fig. 1.

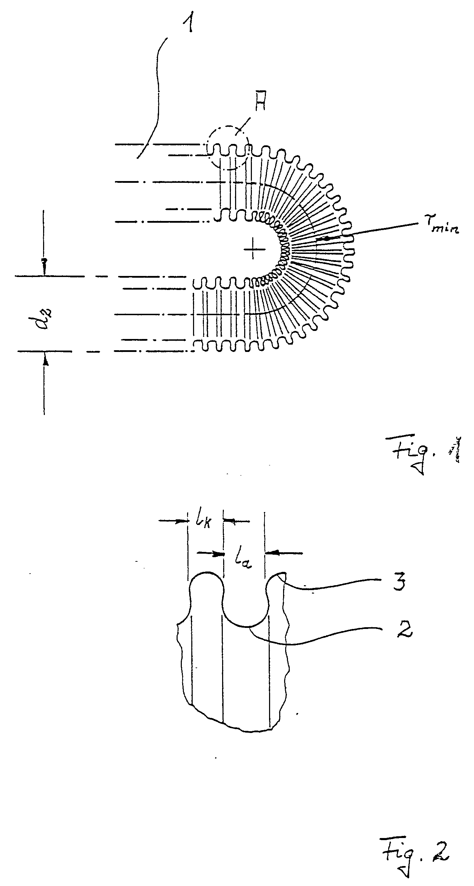

Fig. 1 zeigt einen Krümmungsbogen eines hinsichtlich seiner übrigen Verlegung nicht weiter dargestellten Metallwellschlauches 1 mit einem Außendurchmesser $d_2$. Um diesem Krümmungsbogen einen möglichst kleinen Radius $r_{min}$ und damit dem Wellschlauch hinsichtlich seiner Verlegung eine möglichst dichte Packung zu geben, sind, wie aus der vergrößerten Darstellung des Ausschnittes A in Fig. 2 ersichtlich, die Wellentäler 2 mit ihrem Maß $l_a$ in Axialrichtung des Schlauches gesehen breiter ausgebildet als die Wellenberge 3 mit ihrem Maß $l_k$.

Es wurde gefunden, daß die anhand der Fig. 1 und 2 genannten Größen über die Beziehung

$$ l_a = \frac{d_2 \cdot l_k}{2 r_{min}} \cdot \left( \frac{1}{1 - \frac{d_2}{2 r_{min}}} \right) $$

miteinander in Verbindung stehen, gemäß der sich die Breite der Wellenberge und Wellentäler des Wellschlauches so auslegen lassen, daß auch Biegeradien $r_{min}$ möglich werden, die kleiner als der Außendurchmesser $d_2$ des Schlauches sind.

## Ansprüche

1. Wärmeaustauschelement in Form eines von einem der am Wärmeaustausch beteiligten Medien durchströmten Wellschlauches aus Metall oder Kunststoff mit ringförmiger oder schraubengangförmiger Wellung,
dadurch gekennzeichnet,
daß in Axialrichtung des Wellschlauches (1) gesehen die Breite der Wellentäler (2) größer als die der Wellenberge (3) ist.

2. Wärmeaustauschelement nach Anspruch 1, dadurch gekennzeichnet, daß die Breite der Wellentäler (2) bestimmt ist durch die Beziehung

$$l_a = \frac{d_2 \cdot l_k}{2 r_{min}} \cdot \left( \frac{1}{1 - \dfrac{d_2}{2 r_{min}}} \right)$$

wobei $l_a$ die Wellentalbreite $d_2$ der Außendurchmesser des Wellschlauches (1), $l_a$ die Breite der Wellenberge (3) und $r_{min}$ der kleinstmögliche Biegeradius des Wellschlauches ist.

3. Wärmeaustauschelement nach Anspruch 1 oder 2, dadurch gekennzeichnet, daß bei einem Wellschlauch (1) aus Metall dieser nach der Herstellung durch Rekristallisationsglühen wärmebehandelt ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 025 623 (SPECK) <br> * Figur 3 * <br> --- | 1 | F 28 F 1/08 |
| A | US-A-2 152 280 (A.D. RAPUANO) <br> * Figur 1 * <br> --- | 1 | |
| A | US-A-3 794 080 (HUSTON) <br> * Spalte 3, Zeilen 31-36 * <br> --- | 1 | |
| A | US-A-3 313 319 (OSBORN) <br> * Spalte 2, Zeilen 1-5 * <br> --- | 1 | |
| A | DE-A-1 551 488 (NAGAHARA) <br> * Insgesamt * <br> --- | 1 | |
| A | US-A-2 582 249 (HENDEL) <br> * Insgesamt * <br> ----- | 1 | |
| | | | **RECHERCHIERTE SACHGEBIETE (Int. Cl.4)** <br><br> F 28 F <br> F 16 L |

Der vorliegende Recherchenbericht wurde für alle Patentansprüche erstellt

| Recherchenort | Abschlußdatum der Recherche | Prüfer |
|---|---|---|
| DEN HAAG | 26-09-1988 | SMETS E.D.C. |